# FASCICULE DE BREVET EUROPEEN

(11) **EP 1 058 915 B1**
(45) Date de publication et mention de la délivrance du brevet: **07.05.2003**
(21) Numéro de dépôt: 99907666.4
(22) Date de dépôt: 08.03.1999
(51) Int. Cl.: G06T 15/10

(54) **SYSTEME DE VISUALISATION D'IMAGES TRIDIMENSIONNELLES REALISTES VIRTUELLES EN TEMPS REEL**
ECHTZEIT SYSTEM ZUR DREIDIMENSIONALEN REALISTISCHEN VIRTUELLEN-BILDANZEIGE
SYSTEM FOR DISPLAYING REALISTIC VIRTUAL THREE-DIMENSIONAL IMAGES IN REAL TIME

(30) Priorité: 06.03.1998 FR 9802768
(43) Date de publication de la demande: 13.12.2000
(73) Titulaire: Société Rasterland S.A., 31676 Labege Cedex (FR)
(72) Inventeur: LESTRUHAUT, Olivier, F-31676 Labege Cedex (FR)
(74) Mandataire: Ravina, Bernard
(86) Numéro de dépôt international: FR9900517
(87) Numéro de publication internationale: WO99045503

(56) Documents cités:
- EP-A- 0 700 018
- EP-A- 0 753 834
- EP-A- 0 817 133
- US-A- 4 645 459
- US-A- 4 970 666
- US-A- 5 566 073
- US-A- 5 579 165
- US-A- 5 625 765

## Description

La présente invention est du domaine des systèmes de visualisation d'images tridimensionnelles réalistes virtuelles en temps réel.

De nombreux dispositifs de visualisation d'images réalistes et de réalité virtuelle sont connus. En particulier, les systèmes de simulation de vol comportent une base de données d'informations de nature géographique, correspondant à des paysages réels ou inventés, et le logiciel restitue une image correspondant à la position à un instant donné de l'utilisateur par rapport aux éléments de la base.

Le brevet EP 0 700 018 décrit une méthode de génération d'images interactives. Les étapes du procédé consistent à créer, dans un serveur, des images en trois dimensions d'un environnement virtuel selon les points de vue d'un certain nombre de positions prédéterminées dans cet environnement virtuel. L'utilisateur, situé devant son écran, évolue dans cet environnement virtuel et sa position virtuelle est transmise au serveur par l'intermédiaire d'un réseau. Le serveur revoie alors au terminal de l'utilisateur l'image virtuelle de l'environnement correspondant à sa position. Le serveur peut par exemple transmettre une image de l'arrière plan correspondant à la position virtuelle de l'utilisateur. L'image du premier plan de la scène est crée dans le terminal de l'utilisateur. Les deux images obtenues sont mixées et affichées sur l'écran du terminal de l'utilisateur. Cette méthode permet d'obtenir des images à un moindre coût et permet de simplifier la structure du terminal utilisateur puisqu'une grosse partie du traitement informatique est réalisé dans un serveur centralisé.

Le brevet EP 0 817 133 A, SUN MICROSYSTEM 3NC, décrit un système permettant de visualiser des objets virtuels dans l'environnement réel. Le système comprend un écran, une caméra, un système de positionnement par télémétrie et un système de calcul de l'image virtuelle en deux dimensions par rapport à l'environnement réel. L'image ainsi calculée est alors superposée à l'image prise par la caméra.
Ce système présente certaines limites notamment par rapport au système de télémétrie, en effet, ce type de système de localisation ne permet pas certaines applications dans de grands espaces avec un positionnement précis.
D'autre part, ce système de visualisation est complètement isolé et ne permet aucune interactivité avec d'autres appareils similaires. En effet, la mémorisation de la position de l'objet est contenue dans la mémoire interne du système. Cet aspect limite le réalisme du système puisqu'un seul utilisateur peut visualiser l'objet, le déplacer, et l'observer dans une autre position Chaque utilisateur navigue donc parmi ses propres objets virtuels et ignore totalement ceux des autres. Ce système ne permet donc pas la création et la visualisation d'un environnement virtuel commun à une pluralité d'utilisateurs se superposant à l'environnement réel par nature commun à tous les utilisateurs.

Le brevet US 5 556 073, MARGOLIN JED, décrit un système d'aide au pilotage. Le système comprend un GPS permettant de déterminer la position de l'avion. Une base de donnée contient une représentation virtuelle de l'environnement de l'avion. En fonction de la position de l'avion il est donc possible de visualiser l'environnement virtuel sans se soucier de l'environnement réel. La visualisation de l'environnement peut se faire grâce à un casque de visualisation Ce type de système ne permet pas de superposer un environnement virtuel avec l'environnement réel mais permet juste de substituer l'environnement réel par un environnement virtuel reprenant les caractéristiques de l'environnement réel.

Le brevet US 4 970 666, WELSH WILLIAM T ET AL, décrit un système de représentation d'images virtuelles dans un environnement réel. Les images de l'environnement réel sont numérisées puis la représentation de l'image virtuelle est positionnée par rapport à l'image numérisée. Les deux images sont ensuite superposées. Ce type de système ne permet que de traiter des images fixes mais pas de simuler un objet virtuel en recalculant son image au fur et à mesure que l'utilisateur se déplace et en superposant cette image à l'environnement réel. D'autre part ce système permet de d'ajouter des effets lumineux par exemple sur l'image. Une fois encore, cette opération est très facile dans le cas d'images fixes mais devient très complexe dans le cas d'un utilisateur en mouvement où les images doivent sans cesse êtres recalculées.

Le brevet US 5 625 765, ELLENBY JOHN ET AL, décrit un système permettant d'améliorer par ordinateur la définition d'images agrandies. Les images réelles d'une scène peuvent êtres agrandies grâce à des informations contenues dans l'ordinateur qui reproduisent la scène réelle. Etant donné que la résolution des modèles contenus dans l'ordinateur n'est pas limitée, le système peut offrir une image agrandie sans limite. L'image produite par l'ordinateur et l'image réelle sont combinées pour former une image agrandie selon le point de vue de l'utilisateur. Ce type de système est restreint à l'amélioration de la définition d'images réelles et ne permet pas de superposer un environnement virtuel, représentant des objets virtuels déplaçables et dont la position et commune à une pluralité d'utilisateurs, à un environnement réel.

Le brevet US 5 579 165, MICHEL CLAUDE ET AL, décrit un système optique permettant de superposer une image virtuelle sur une image réelle. L'image virtuelle peut par exemple être une image symbolique issue d'une carte. Ce brevet se limite au dispositif optique de superposition d'images mais ne décrit pas précisément ses applications. Il n'est donc pas possible à partir des déments de ce brevet de réaliser une application concernant la création d'un environnement virtuel interactif se superposant à l'environnement réel.

La présente invention entend proposer un système mobile de visualisation d'images tridimensionnelles virtuelles incrustées sur un fond d'environnement réel, capable de suivre en temps réel les déplacements d'un ou plusieurs utilisateurs et d'afficher en temps réel les résultats de ses interactions. Le but étant d'offrir à chaque utilisateur la visualisation d'un environnement virtuel interactif se superposant à leur environnement réel. L'environnement virtuel peut être commun à tous les utilisateurs, chaque utilisateur le percevant selon son point de vue et certains éléments de l'environnement virtuel pouvant être déplacés par chaque utilisateur, les autres utilisateurs percevant ce mouvement en temps réel. L'invention est definie dans la revendication 1 ci-jointe.

On comprend que grâce à cette disposition, l'utilisateur va pouvoir simuler l'implantation d'un objet tel que bâtiment, rond-point, ouvrage d'art, etc., dans le site réel prévu pour son implantation, avec un réalisme extrême, facilitant ainsi sa prise de décision vis a vis de différentes options d'un projet. Il s'agit bien d'une nouvelle façon de voir et d'appréhender l'espace pour les utilisateurs: il ne vont plus à l'ordinateur, mais l'informatique vient à eux en s'incrustant dans leur champ de vision.

On contourne également par cette disposition l'absence de conviction de nombreuses personnes face à des images présentées sur écran de type vidéo ou informatique, où le paysage, qui a été recalculé numériquement, apparaît dans un style incontestablement artificiel, anguleux, saccadé, peu de nuances de couleurs, pas de mouvements naturels, etc... Ici, on conserve l'image réelle du paysage, puisqu'il s'agit d'une retransmission vidéo, et on ajoute une image virtuelle calculée, facilitant ainsi son acceptation par le public. En effet, la familiarité qu'il éprouve avec la visualisation d'une image vidéo rendra plus crédible l'intégration de l'image virtuelle rapportée, qui ne représentera plus alors qu'une faible surface de l'image globale.

Selon une disposition particulière, le moyen de détection en temps réel de la position des utilisateurs dans le site géographique d'implantation des objets virtuels prend la forme soit d'un système GPS, abréviation de global positionning system, en liaison satellite, comportant un poste fixe et des postes mobiles sous forme de sacs à dos d'un poids inférieur à 4 kg, soit de caméras vidéo suiveuses, dont la position est connue avec précision.

Cette disposition contribue à mettre en oeuvre l'invention à l'aide de moyens simples et déjà connus.

La description qui va suivre, faite en regard des dessins annexes dans un but explicatif et nullement limitatif, permet de mieux comprendre les avantages, buts et caractéristiques de l'invention.
- La figure 1 schématise les éléments principaux de l'invention.

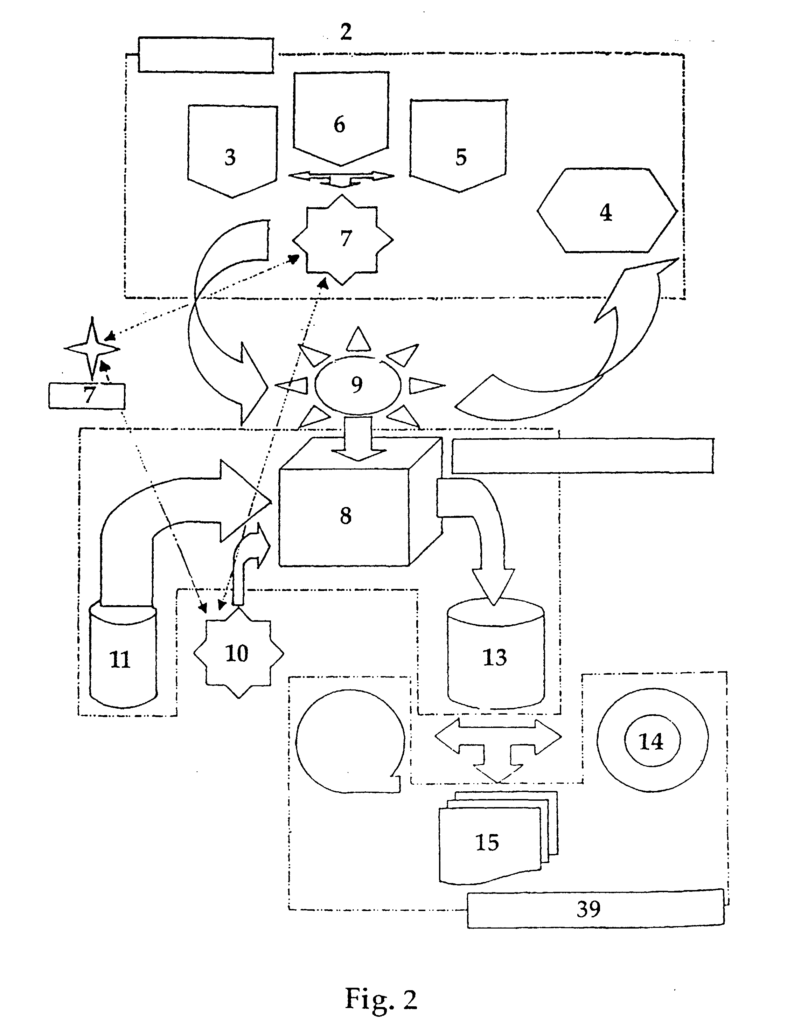

- La figure 2 illustre les différents éléments fonctionnels.
- La figure 3 illustre l'architecture du système.

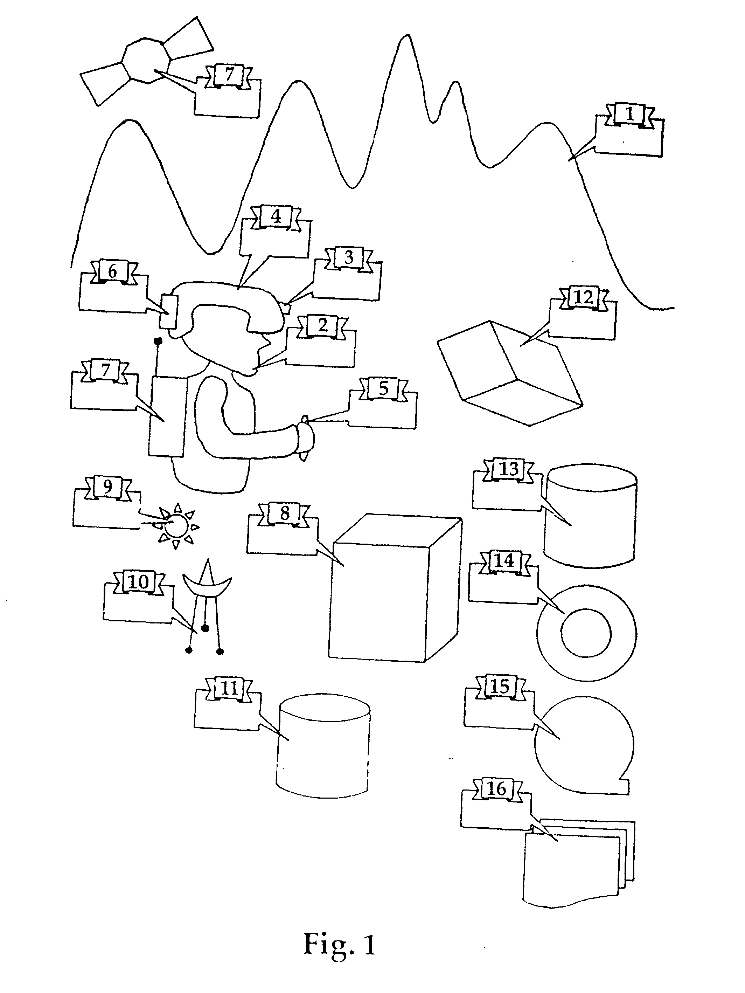

Tel que représenté sur la figure 1, le dispositif immersif In Situ d'Imagerie virtuelle interactive géoréférencée en temps réel dans un environnement géographique donné (1) comporte les sous-ensembles principaux suivants : pour chaque utilisateur (2), une caméra vidéo (3), un casque de visualisation d'images virtuelles (4), un joystick (5), un traqueur de mouvements de tête (6), une antenne GPS mobile (7) en liaison avec un ou plusieurs satellites (7), le tout expédiant ses données vers la centrale de traitement (8) par voie hertzienne (9). La centrale de traitement (8)(micro-ordinateur) reçoit également les données de l'antenne GPS fixe (10), exploite la base de données d'objets virtuels (11), et calcule une image composite finale réexpédiée vers le casque (12).
Le cas échéant, cette image, ou une séquence d'images, peuvent être sauvegardées via un disque dur ultra rapide (13), sous forme de CD (14), cassette vidéo, analogique ou numérique, (15), ou envoyée vers un périphérique d'impression (16).

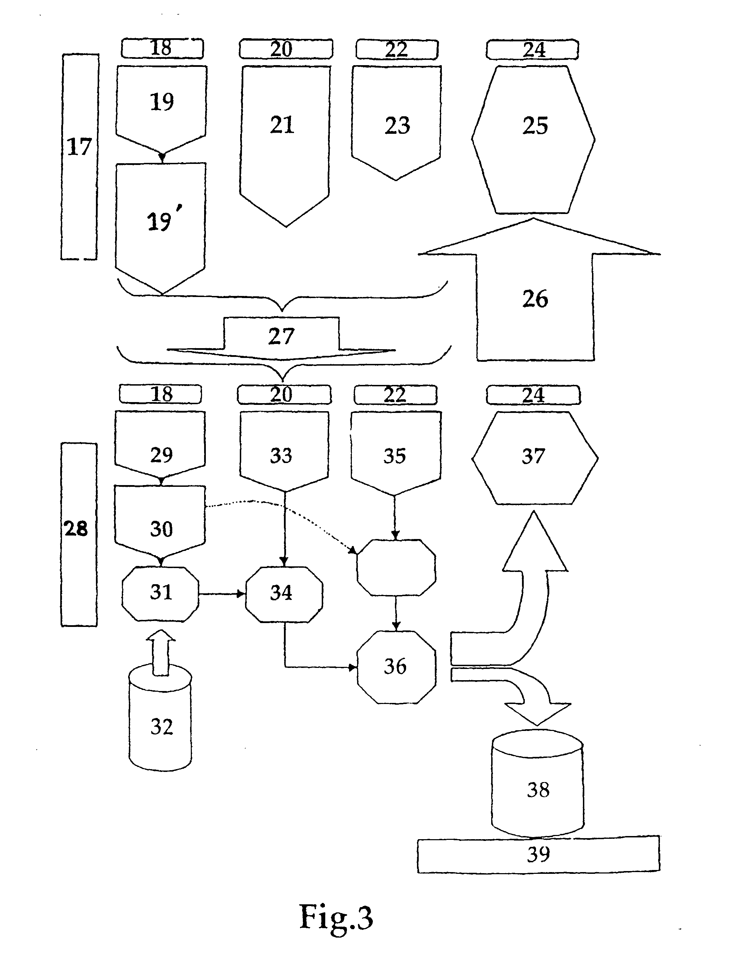

L'architecture du système est organisée selon le schéma de la figure 3 dans lequel le repère (17) indique la partie utilisateur avec (18) la position définie par le traqueur de tête (19) et le GPS mobile (19') ; (20) l'intéraction avec le joystick (21) ; (22) le site réel avec la caméra vidéo, (23) la restitution (24) à l'utilisateur avec le casque virtuel (25) depuis la partie ordinateur (28) par transmission hertzienne (26).

Depuis l'utilisateur (17), par transmission hertzienne (27), les éléments sont transmis à l'ordinateur (28). On retrouve:
- La position (18) avec un GPS à poste fixe (29) avec traitement de la position (30), calcul de l'image virtuelle (31) selon le bon point de vue et une base de donnée (32) des objets virtuels. La base de données (32) contient la position et les paramètres caractéristiques de chaque objet virtuel. Cette base de données (32) est centralisée, c'est à dire que tous les utilisateurs ont la vision d'un même environnement virtuel présenté à chacun selon son point de vue.
- L'interaction (20) avec analyse de l'interaction (33), et calcul de l'image virtuelle modifiée (34).
- Le site réel (22) avec acquisition en temps réel de l'image vidéo (35) et le mixage (36) de l'image vidéo et de l'image virtuelle, le résultat obtenu étant dirigé par la restitution (24) par un émetteur vidéo (37) et vers le disque dur (38) avec périphérique de sortie (39).

Au niveau de l'utilisateur, voir la figure 1, la fonction position est articulée autour du GPS mobile (7) qui permet de déterminer la position de l'utilisateur sur le terrain par rapport à un repère d'initialisation. Les informations (x,y,z) sont expédiées par ondes vers l'ordinateur.

Il y a en temps réel dialogue de l'appareil avec des satellites et avec un poste fixe.
Le traqueur de tête (4) permet de déterminer si l'utilisateur regarde en haut, en bas, à droite, etc...

La fonction interaction est assurée par le joystick (5), dispositif à l'identique d'une souris mais mobile dans les trois dimensions et qui permet à l'utilisateur d'interagir sur l'objet virtuel visualisé, selon quelques actions simples de base : déplacer, supprimer, pivoter, agrandir ou rétrécir, changer de couleur. Les nouvelles données relatives à l'objet virtuel modifié sont prise en compte dans la base de données (32).

Les écrans à l'intérieur du casque virtuel (4) se gèrent comme un écran standard. On peut donc à loisir faire apparaître des menus déroulant simples par exemple de type WINDOWS 95, marque déposée.

Sur le site réel, la caméra vidéo (3) placée sur le casque de l'utilisateur filme une image du site qui correspond à son champ de vision. L'image est expédiée par ondes vers la carte d'acquisition en temps réel de l'ordinateur,

La restitution s'effectue, depuis l'ordinateur, sur le casque virtuel par transmission hertzienne. Le casque virtuel est doté de deux écrans LCD, un par oeil. Cela permet à l'utilisateur de visualiser l'image finale en monoscopie ou en stéréoscopie, les images droites et gauches étant légèrement différences, afin d'accentuer l'effet de relief.
Le système offre un suivi parfaitement fluide des mouvements et des déplacements de l'utilisateur en temps réel.

L'ensemble des données du niveau utilisateur est émis vers l'ordinateur par transmission hertzienne. A ce niveau ordinateur, la fonction position est assurée par le GPS fixe (10) qui détermine la position de l'utilisateur sur le terrain par comparaison avec les satellites et avec le poste mobile, le tout en temps réel.

Le traitement de la position qui débouche sur le calcul de l'image virtuelle est effectué par compilation des données d'emplacement (x, y, z) et d'angle de visée, cette compilation permettant de calculer l'image virtuelle selon le bon point de vue. Une base de données des objets virtuels (11) intervient à ce niveau. L'analyse de l'interaction s'effectue par la prise en compte de quelques actions simples de base : déplacer, supprimer, pivoter, agrandir ou rétrécir ou changer de couleur, etc... qui sont effectuées par l'utilisateur. Le calcul de l'image virtuelle et l'interaction contribuent à l'obtention de l'image virtuelle modifiée.

De la position «site réel» est effectuée l'acquisition en temps réel de l'image vidéo. La carte d'acquisition va synchroniser l'image vidéo et l'image virtuelle modulée. Ce mixage sera ensuite à la fois sauvegardé et restitué au niveau du casque virtuel de l'utilisateur

Le dispositif immersif In Situ d'Imagerie virtuelle géoréférencée interactive en temps réel est destiné à visualiser un objet ou une base de données d'objets virtuels. Ces données informatiques peuvent être soit fournies par le client final, soit créées à partir de plans papier. Dans tous les cas, elles devront posséder les caractéristiques suivantes :

La structure initiale du ou des objets à visualiser et de type filaire tridimensionnel. L'objet à créer et divisé en sous-ensembles correspondants aux différents matériaux le composant, puisque l'affichage devra simuler l'aspect visuel de ce matériau lors de la visualisation. Pour chacun de ces sous-ensembles, une armature dense de lignes est dessinée et un code affecté. C'est sur cette armature que viendra se plaquer, en épousant la forme, l'image simulant le matériau. C'est en fonction du code que la dite image sera choisie. S'il n'existe aucune base de données, la création sera réalisée selon le procédé de vectorisation automatique.

Dans une première phase, le plan papier des objets à visualiser est numérisé par l'utilisation d'un scanner haute résolution optique de type connu, relié à un ordinateur de type PC, qui stocke en mémoire les plans numérisés. Le fichier ainsi obtenu contient un grand nombre de points noirs et blancs qui, alignés dans l'ordre enregistré par la machine, reconstituent l'image du plan orignal, à la manière d'un photocopieur. Les éléments dessinés par ces points n'ont aucune consistance, ils n'existent pas en tant qu'entités mesurables, quantifiables ou différentiables par des critères géométriques. Ces points renseignent sur la position des éléments les uns par rapport aux autres, mais pas sur leur nature (cercles, textes, etc.). Ce type d'image est connu sous le nom d'image raster ou image bitmap.

Le plan est alors vectorisé à l'aide d'un logiciel paramétré en fonction des types de données acquises. Cette opération consiste à placer sur les alignements de points noirs du plan numérisé des vecteurs, entités mathématiques définies par des coordonnées, lignes, polygones, cercles, etc.., et non plus par une juxtaposition de points. Chaque entité peut se voir attribuer individuellement des caractéristiques d'affichage: couleur, épaisseur, etc... Il est alors possible de structurer le plan par éléments, et de les classer par famille : bâtiments, voirie, parcelles, par exemple.

Certains éléments graphiques ne sont pas ou mal reconnus par le logiciel de vectorisation, et doivent alors être corrigés manuellement par des méthodes de saisie de données connues, avec des logiciels de dessin assisté par ordinateur de type classique tels que Microstation®, Autocad® par exemple.

A l'issue de cette phase, le plan de départ est transformé en un fichier informatique contenant toutes les données originales, classées par couches : bâtiments, voirie, parcelles, par exemple, à la manière d'un bloc-notes de feuilles transparentes. On peut alors à loisirs ne visualiser que certains éléments, tout en conservant leur position exacte.

La phase suivante est celle du géoréférencement :
Grâce à la nature vectorielle du fichier ainsi obtenu, chaque entité peut, individuellement ou en groupe, être mise à l'échelle, de sorte que sa dimension informatique devienne sa dimension terrain réelle à l'échelle 1, et non plus une dimension papier, puis déplacée et orientée, de sorte que ses coordonnées reflètent alors sa position géographique exacte dans un repère donné : UTM, système de coordonnées Lambert, etc...
Deux objectifs ont ainsi été atteints :
- L'exactitude des dimensions :.
   Toute dimension relevée sur le fichier informatique est la dimension réelle de l'objet mesuré. L'on peut ainsi aller vérifier sur le terrain, si besoin est, l'exactitude et la tolérance du document original, ou confirmer la validité du procédé.
- La détermination d'emplacement géographique unique dans un repère donné.
   Par exemple, les coordonnées x=564224,25 et y=178206,43 dans le système de coordonnées Lambert III sud désignent le centre de l'église Saint-Jean à Gaillac (81).
   La précision, à l'échelle d'une commune par exemple, est de l'ordre du millimètre.
   On a ainsi créé un fichier informatique géoréférencé contenant toutes les informations du document original, mais existant seulement en deux dimensions (plan).

La phase suivante est donc d'ajouter une dimension d'élévation aux éléments contenus dans le fichier informatique de sorte qu'ils apparaissent en tant que volumes. Pour ce faire, il faut affecter à chaque élément graphique une coordonnée d'élévation z.
Pour des objets simples, ou destinés à apparaître en arrière-plan, cette opération peut-être effectuée façon automatique, par ajout d'une élévation aléatoire et paramétrée à certaines catégories d'éléments. Par exemple, on peut décider, d'attribuer une élévation aléatoire entre 4 et 6 mètre par tranche de 50 cm à tous les éléments de la famille bâtis.

Pour des projets nécessitant une plus grande précision, on peut également affecter à chaque bâtiment sa hauteur réelle, si elle a été relevée sur le terrain par un géomètre. Cette affectation se fait manuellement.
Dans certains cas de figure, l'étape de vectorisation n'aura pas lieu, et le ou les objets seront directement créés à partir d'un programme connu de modélisation. Nous avons ici donné plusieurs exemples afin d'expliciter les phases de création d'une base de données d'objets virtuels, mais nous tenons à rappeler que dans le cadre du dispositif de visualisation objet des présentes, seuls les objets n'existant pas sur le site réel feront l'objet d'une telle modélisation.

La phase d'habillage des éléments représentatifs des éléments géométriques se fait à partir d'une première représentation filaire sur ordinateur. La base de données d'objets virtuels est à ce stade constituée uniquement de structures filaires. Un peu à la manière de mannequins, ils vont être revêtus d'images numériques de manière à recréer l'illusion de leur matériau. Deux techniques connues sont utilisées :
- La juxtaposition d'une multitude de petites images identiques recrée par illusion d'optique l'aspect de matériaux tels que bois, pierre, béton, etc. On peut également recréer ainsi des aspects plus travaillés tels que murs de briques, palissades, crépis, etc. La bibliothèque de tous les aspects matériaux disponibles est conservée en mémoire dans l'ordinateur, et peut être enrichie en permanence. Elle sera chargée dans la mémoire de la carte graphique au moment de l'initialisation du dispositif.
- La photographie numérique d'un élément d'environnement existant, une façade d'immeuble par exemple, ou d'une partie de cet élément, portes d'entrée, fenêtre, etc..., est plaquée sur la structure filaire de l'objet virtuel. Ce procédé plus économique permet de restituer en visualisation des objets courants sans avoir à les construire informatiquement parlant. Ainsi, pour modéliser une porte cochère de manière réaliste faut-il la décomposer en son dormant et son battant, puis y distinguer le chambranle et les panneaux et ainsi de suite. Avec le mappage, le dessin d'un rectangle suffit.

La restitution des effets de lumière, des ombrages et des reflets est indispensable au réalisme d'un objet virtuel. Le terme utilisé est le rendu d'image. Les algorithmes utilisés, tels que Gouraud ou Phong, sont classiques pour l'homme de l'art. S'il n'est pas l'objet d'une innovation, le moteur de rendu sera toutefois développé spécifiquement pour le dispositif pour répondre aux exigences de vitesse et surtout d'interaction.
Cette restitution tient compte de la provenance de la lumière et de l'emplacement des objets les uns par rapport aux autres. La prise en compte de la position réelle de la lumière solaire à un instant donné de la journée est possible, de même que son évolution, ce qui accentuera l'impression d'intégration des bâtiments dans le paysage réel.
La partie logicielle gérant cette fonction s'appelle le moteur de rendu. Le calcul de la restitution des textures et des effets de lumière en temps réel est fait au moyen de cartes graphiques dédiées intégrées au sein du micro-ordinateur. De nombreuses cartes connues de l'homme de l'art conviennent à cette tâche.

L'exploitation de cette base de données s'effectue comme suit :
La mise en scène va consister à placer informatiquement des objets virtuels tels qu'ils vont devoir être visualisés sur le site réel. Grâce au géoréférencement, cette mise en scène consiste donc en l'affectation de coordonnées aux différents objets virtuels, dans le même repère géographique que celui du site concerné.
Une fois rendus sur le site, les utilisateurs vont devoir chausser casque et sac à dos, puis s'initialiser. Cela signifie simplement qu'ils vont devoir mettre sous tension leur équipement à un endroit arbitrairement choisi sur le site, mais identique pour tous les utilisateurs. Cet endroit sera baptisé « point 0 » ou point de référence, et c'est à partir de lui que seront quantifiés leurs déplacements.

Le suivi des déplacements de l'utilisateur est réalisé en utilisant des capteurs de position et d'altitude de type G.P. S., abréviation de global positionning system. Ce dispositif est connu. Le suivi du champ de vision de l'utilisateur est assuré par un dispositif de détection du mouvement intégré au casque de visualisation, dénommé traqueur. Ce dispositif est connu. Un programme simple détermine alors à partir de ces données la position et l'angle selon lesquels calculer l'image de l'objet virtuel de sorte qu'elle s'intègre parfaitement dans le champ de vision de l'utilisateur.

L'affichage des images vues par les utilisateurs se fait par l'intermédiaire de casques de visualisation de type classique en réalité virtuelle. Ces casques comportent deux écrans à cristaux liquides, un devant chaque oeil. Ces écrans pourront afficher deux images très légèrement différentes, se qui conduira l'utilisateur à une impression renforcée d'image tridimensionnelle. C'est un procédé connu dénommé restitution stéréoscopique.
L'utilisateur est muni d'un joystick qui va lui permettre d'exercer quelques interactions de base sur l'objet qu'il est en train de visualiser. Il va ainsi pouvoir dans un premier temps supprimer, déplacer, faire pivoter, agrandir ou rétrécir, ou changer la couleur des objets qu'il visualise, et surtout observer instantanément le résultat de son interaction, tout en conservant la fluidité de visualisation et l'implantation dans le site réel.

Le dispositif est complété par un dispositif de sauvegarde pouvant être activé ponctuellement ou en continu, et permettant de garder trace de la combinaison image virtuelle / image du site On peut ainsi archiver plusieurs hypothèses d'emplacements ou de couleur pour le ou les objets virtuels, et les imprimer ou les visualiser a posteriori par le biais de périphériques classiques connus en informatique tels qu'une imprimante, ou en vidéo sur un magnétoscope analogique ou numérique.

Comme on l'a vu dans la description, le dispositif selon l'invention permet à des décideurs d'évoluer physiquement au sein d'études ou de projets, de mieux appréhender l'impact de travaux prévus sur l'environnement, et dans l'espace.
Il permet également de tester en temps réel des options ou des hypothèses et d'en apprécier instantanément l'impact. Le temps réel, outre un grand confort d'utilisation, apporte également un avantage économique certain, quand l'étude d'une variante nécessitait auparavant des jours, voire des semaines de préparations et de calculs pour présenter un nouveau projet. Grâce au dispositif selon l'invention, des hypothèses que l'on n'aurait osé envisager pour des raisons économiques, pourront l'être sans aucun surcoût.

Le résultat recherché est la réduction des durées de décision, une meilleure perception des éventuelles inadéquations entre la théorie du projet sur plan avec la réalité du site, en particulier pour les personnes qui n'ont pas une bonne capacité d'abstraction, et enfin, la suppression de la limitation des hypothèses, due aux coûts d'études. Le temps réel et l'interaction permettent un nombre illimité d'itérations, qui elles mêmes permettent de s'approcher mieux encore de la meilleure solution, ou du meilleur consensus

Une variante consiste à remplacer le système G.P.S. de suivi de l'utilisateur par des caméras vidéo suiveuses de type connu, dont on peut récupérer les données de positionnement sur micro-ordinateur. Ce système de suivi est nettement moins précis et d'un rayon d'action inférieur, mais peut permettre de fournir un système à un coût plus abordable pour des applications à périmètre restreint de 400 m² environ.

Dans une autre variante, la base de données des objets a visualiser est reliée à des données alphanumériques caractérisant chacun des éléments, par exemple leur coût d'implantation. Il est alors aisément possible, en fonction de la configuration visualisée à un moment donné, d'afficher simultanément dans un angle des écrans du casque virtuel, des informations de prix global, qui évolueront au fur et à mesure des hypotheses testées.
Par extension, toutes les variantes résultant de la connexion de logiciels ou matériels informatiques et péri-informatiques connus au dispositif.

La portée de la présente invention ne se limite pas aux modes de réalisation présentés mais s'étend au contraire aux perfectionnements et modifications à la portée de l'homme de l'art.

## Revendications

1. Dispositif de visualisation d'images tridimensionnelles réalistes calculées par ordinateur et incrustées informatiquement dans un environnement réel, comportant au moins un dispositif individuel et portatif de capture des images réelles perçues par l'utilisateur tel qu'une caméra, un dispositif de mémoire des caractéristiques des objets virtuels à visualiser, un dispositif de mémoire de la position prévue de ces objets dans un environnement géographique réel, un dispositif de suivi de la position de l'utilisateur, un dispositif de suivi du champ de vision de l'utilisateur, un dispositif d'entrée de commandes par 1' utilisateur, un dispositif de calcul informatique incluant un logiciel de calcul, et un dispositif individuel et portatif de visualisation des images ainsi calculées dispositif se caractérisant en ce qu'il comporte en combinaison :
- un moyen de détection et de suivi en temps réel de la position de chaque utilisateur dans le site géographique d'implantation des objets virtuels, par rapport à un point de référence arbitraire,
- un moyen de détection et de suivi en temps réel de la position du champ de vision de chaque utilisateur (haut, bas, droite, gauche) par rapport à un point de référence situé sur chaque utilisateur,
- un moyen vidéo de capture et de suivi en temps réel des images réelles perçues par chaque utilisateur,
- une base de données commune à tous les utilisateurs contenant les positions et les paramètres caractéristiques de chaque objet virtuel et mémorisant leurs déplacements éventuels,
- un moyen de calcul d'images virtuelles en temps réel, fonction de la position et du champ de vision de chaque utilisateur préalablement détecté,
- un moyen de mixage de l'image virtuelle ainsi calculée avec l'image vidéo préalablement capturée, de sorte que, pour chaque utilisateur, l'image virtuelle s'incruste sur l'image vidéo de manière réaliste et non transparente, à chaque utilisateur équipé d'un moyen de visualisation individuel et portatif visualisant l'image ainsi calculée, combinant les images réelles perçues par l'utilisateur et les images des objets virtuels dont les positions sont communes à tous les utilisateurs mais visualisées par chaque utilisateur sous un angle différent.

2. Dispositif selon la revendication 1, **caractérisé en ce que** le moyen d'affichage prend la forme de casque de visualisation d'images virtuelles, comportant un écran devant chaque oeil de l'utilisateur.

3. Dispositif selon la revendication 1, **caractérisé en ce que** le moyen de détection en temps réel de la position des utilisateurs dans le site géographique d'implantation des objets virtuels prend la forme d'un système G.P.S. ou de caméras vidéo suiveuses dont la position est connue avec précision.

4. Dispositif selon l'une quelconque des revendications 1 à 3, **caractérisé en ce qu'**il comporte également :
- un moyen de numérisation de plans,
- un moyen de vectorisation des images numérisées,
- un moyen de géoréférencement de ces images vectorisées.

5. Dispositif selon l'une quelconque des revendications 1 à 4, **caractérisé en ce qu'**il comporte également un moyen d'élévation des données bidimensionnelles géoréférencées.

6. Dispositif selon l'une quelconque des revendications 1 à 5, **caractérisé en ce qu'**il comporte également un moyen de restitution des effets de lumière tenant compte de la position réelle du soleil sur les lieux de la visualisation.

7. Dispositif selon l'une quelconque des revendication 1 à 6, **caractérisé en ce qu'**il comporte également un moyen d'affichage de données représentatives d'un paramètre caractérisant la configuration complète en cours de visualisation.

## Claims

1. Device for the display of realistic three-dimensional images calculated by computer and inlaid by information technology in a real environment, including at least one individual and portable device to capture real images perceived by the user such as a camera, a memory device for the characteristics of the virtual objects to be displayed, a memory device for the forecast position of the said objects in a real geographical environment, a device to monitor the user's position, a device to monitor the user's field of vision, a device for the user to enter commands, an information technology calculation device including calculation software and an individual and portable device to display images thus calculated, which device is **characterised in that** it includes a combination of the following:
- a means for detection and monitoring in real time of the position of each user in the geographical site of location of the virtual objects in relation to an arbitrary point of reference,
- a means for detection and monitoring in real time of the position of each user's field of vision (top, bottom, right, left) in relation to a point of reference located on each user,
- a video facility for capture and monitoring in real time of the real images perceived by each user,
- a database shared by all users containing the positions and characteristic parameters for each virtual object memorising their possible movements,
- a facility for calculation of virtual images in real time in relation to the position and field of vision of each user previously detected,
- a means to mix the virtual image thus calculated with the video image previously captured such that, for each user, the virtual image is inlaid on the video image in a realistic and non-transparent manner, for each user equipped with an individual and portable display facility visualising the image thus calculated, combining the real images perceived by the user and the images of virtual objects whose positions are common to all users but visualised by each user at a different angle.

2. Device according to claim 1 **characterised in that** the means of display comes in the form of a virtual image display headset including a screen in front of each eye of the user.

3. Device according to claim 1 **characterised in that** the means of detection in real time of the positions of users in the geographical site of the location of the virtual objects takes the form of a G.P.S. system or video monitoring cameras whose positions are known precisely.

4. Device according to any one of claims 1 to 3 **characterised in that** it also includes:
- a means for digitisation of maps,
- a means for vectorisation of digitised images,
- a means for georeferencing of these vectorised images.

5. Device according to any one of claims 1 to 4 **characterised in that** it also includes a means for elevation of the two-dimensional georeferenced data.

6. Device according to any one of claims 1 to 5 **characterised in that** it also includes a means for restoration of lighting effects taking the real position of the sun at the places of visualisation into account.

7. Device according to any one of claims 1 to 6 **characterised in that** it also includes a means for display of data representative of a parameter characterising the complete configuration being displayed.

## Patentansprüche

1. Vorrichtung für das Darstellen von realistischen drei-dimensionalen Bildern, die vom Computer berechnet und durch Informationstechnologie in eine reale Umgebung eingelegt werden, wenigstens beinhaltend eine einzelne und tragbare Vorrichtung zum Erfassen realer Bilder, die von dem Benutzer wahrgenommen werden, wie zum Beispiel eine Kamera, ein Speicherelement für die Merkmale der virtuellen Objekte, die dargestellt werden sollen, ein Speicherelement für die vorhergesagte Position der besagten Objekte in einer realen geografischen Umgebung, eine Vorrichtung zur Überwachung der Position des Benutzers, eine Vorrichtung zur Überwachung des Sichtfeldes des Benutzers, eine Vorrichtung für den Benutzer zur Eingabe von Befehlen, eine IT-Berechnungsvorrichtung einschließlich Berechnungssoftware und eine einzelne und tragbare Vorrichtung für die Darstellung der so berechneten Bilder, letztere **dadurch gekennzeichnet, dass** sie eine Kombination der folgenden Elemente beinhaltet:
- eine Vorrichtung für das Auffinden und die Überwachung in Realzeit der Position eines jeden Benutzers an dem geografischen Standort der virtuellen Objekte in Bezug auf einen willkürlichen Referenzpunkt,
- eine Vorrichtung für das Auffinden und die Überwachung in Realzeit der Position des Sichtfeldes eines jeden Benutzers (oben, unten, rechts, links) in Bezug auf einem Referenzpunkt, der sich an jedem Benutzer befindet,
- eine Videovorrichtung für das Erfassen und Überwachen in Realzeit von realen Bildern, die von jedem Benutzer wahrgenommen werden,
- eine von allen Benutzern gemeinsam genutzte Datenbank, die die Positionen und die charakteristischen Parameter eines jeden virtuellen Objekts enthält, wobei ihre möglichen Bewegungen gespeichert werden,
- ein Element zur Berechnung der virtuellen Bilder in Realzeit in Bezug auf die Position und das Sichtfeld eines jeden vorher detektierten Benutzers,
- eine Vorrichtung zum Mischen des so berechneten virtuellen Bildes mit dem vorher aufgenommenen Videobild und zwar in der Form, dass das virtuelle Bild auf das Videobild in einer realistischen und nicht-transparenten Art und Weise eingelegt wird, und zwar für jeden Benutzer, der mit einem einzelnen und tragbaren Anzeigeelement ausgestattet ist, auf dem das so berechnete Bild visualisiert werden kann, wobei die realen Bilder, die von dem Benutzer wahrgenommen werden und die Bilder der virtuellen Objekte, deren Positionen für alle Benutzer gleich sind, jedoch von jedem Benutzer in einem anderen Winkel gesehen werden, kombiniert werden.

2. Vorrichtung gemäß Anspruch 1, **dadurch gekennzeichnet, dass** dieses Anzeigeelement die Form eines Headsets zur Darstellung virtueller Bilder, einschließlich eines Bildschirm vor jedem Auge des Benutzers hat.

3. Vorrichtung gemäß Anspruch 1, **dadurch gekennzeichnet, dass** die Vorrichtung zum Auffinden der Positionen der Benutzer in Realzeit an dem geografischen Standort der virtuellen Objekte die Form eines G.P.S.-Systems oder von Videoüberwachungskameras hat, deren Positionen genau bekannt sind.

4. Vorrichtung gemäß einem der Ansprüche 1 bis 3, **dadurch gekennzeichnet, dass** sie ebenfalls beinhaltet:
- eine Vorrichtung zur Digitalisierung von Landkarten,
- eine Vorrichtung zur Vektorisierung von digitalisierten Bildern,
- eine Vorrichtung zur Georeferenzierung dieser vektorisierten Bilder.

5. Vorrichtung gemäß einem der Ansprüche 1 bis 4, **dadurch gekennzeichnet, dass** sie auch eine Vorrichtung zur Elevation der zweidimensionalen georeferenzierten Daten aufweist.

6. Vorrichtung gemäß einem der Ansprüche 1 bis 5, **dadurch gekennzeichnet, dass** sie auch eine Vorrichtung für die Wiederherstellung der Beleuchtungseffekte aufweist, wobei die tatsächliche Position der Sonne an den Visualisierungsorten berücksichtigt wird.

7. Vorrichtung gemäß einem der Ansprüche 1 bis 6, **dadurch gekennzeichnet, dass** sie auch ein Anzeigeelement der Daten aufweist, die für einen Parameter repräsentativ sind, der die komplette Konfiguration, die angezeigt wird, charakterisiert.
